Europäisches Patentamt

European Patent Office

Office européen des brevets

(11) Publication number: **0 143 128**
**B1**

# (12) EUROPEAN PATENT SPECIFICATION

(45) Date of publication of patent specification: **09.09.87**

(21) Application number: **83307266.3**

(22) Date of filing: **29.11.83**

(51) Int. Cl.⁴: **F 01 L 9/04,** F 01 L 9/02,
F 16 K 31/00

(54) Valve operating mechanism for internal combustion and like-valved engines.

(43) Date of publication of application:
**05.06.85 Bulletin 85/23**

(45) Publication of the grant of the patent:
**09.09.87 Bulletin 87/37**

(84) Designated Contracting States:
**AT BE CH DE FR IT LI LU NL SE**

(56) References cited:
**FR-A-2 133 288**
**FR-A-2 348 369**
**FR-A-2 461 097**
**US-A-4 009 695**

**PROCEEDINGS OF THE NATIONAL
CONFERENCE ON FLUID POWER, 29th annual
meeting, 25th-27th September 1973, vol. 27,
pages 167-183, Chicago, Illinois, US; C.G.
O'NEILL et al.: "Piezoelectric drivers for fluid
power control"**

(73) Proprietor: **Moloney, Paul Julian
33 Malvern Drive
Woodford Green Essex (GB)**

(72) Inventor: **Moloney, Paul Julian
33 Malvern Drive
Woodford Green Essex (GB)**

(74) Representative: **Powell, Stephen David et al
J.F. Williams & Co. 34 Tavistock Street
London WC2E 7PB (GB)**

Courier Press, Leamington Spa, England.

## Description

This invention relates to a valve operating mechanism for internal combustion and like-valved engines.

It has for some time been realized that the requirements for engine valve timing in an internal combustion engine are variable depending upon the speed of the engine when optimum operation is desired. Thus in the use of the usual mechanically operated valve system, operated by means of a camshaft, selection is dependent upon the maximum engine power at high speed operation, minimum exhaust emissions at low speed part-load operation, or on some form of compromise between the two. Considerable research has been undertaken on this subject which have largely produced the conclusion that, ideally, full control over every parameter of valve movement is required; and these parameters need to be varied in response to the operating conditions of the engine at any particular time. As a result of this research, various modifications have been proposed for existing camshaft installations, in dependence upon the particular objectives which have been considered in the particular research involved. Nevertheless, no modification has been found which is capable of providing a full optimum control of the valve operation over the whole of the operating conditions of the engine, and, as a result, any proposed system is effectively only a compromise.

In GB—A—1 569 638, there is described an engine valve actuator which is driven hydraulically or pneumatically from a pressure fluid source. A piezo-electric device controls a hydraulic valve. However, this form of actuation of an engine valve is relatively slow, and the engine speed is generally below 1000 r.p.m. In order to respond rapidly to the constantly changing parameters which need to be used to control the valve effectively, a more efficient valve actuator is needed.

The present invention seeks to provide a valve operating mechanism for an internal combustion, or like-valved engine in which the operating mechanism is improved so as to enable fuller control to be exercised over each of the valves of the engine.

According to the invention, there is provided a valve operating mechanism for an internal combustion engine or like-valved engine which is characterised by provision of a piezo-electric actuator device which directly or indirectly drives the engine valve in accordance with the expansion of the actuator device, and by control means which control the electrical feed to the piezo-electric control device in accordance with parameters of the engine operation fed to it.

In a first form of the invention, the piezo-electric device is coupled to the engine valve through an amplifying mechanical linkage.

In a second form of the invention, the piezo-electric device is connected to the engine valve through a fluid linkage including an hydraulic or pneumatic piston and cylinder arrangement for directly driving the valve.

Control of the piezo-electric device is preferably carried out with a feedback loop control circuit, the control circuit being fed with instructions by a microprocessor with associated memory which in turn is fed by values representing engine operating parameters. Such parameters may include crankshaft position, engine speed, mixture information, and exhaust information.

The invention will now be described in greater detail, by way of example, which reference to the drawings, in which;

Figure 1 is a diagrammatic view of a valve operating mechanism in accordance with the invention, with mechanical linkage between the piezo-electric actuating device, and the valve;

Figure 2 is a diagrammatic view of a valve operating mechanism in accordance with the invention, in which two piezo-electric devices act as fluid/gas pumps; and

Figure 3 is a block circuit diagram showing a typical proposal for the circuitry of the control means for control of the piezo-electric devices as shown in Figures 1 and 2.

Referring firstly to Figure I, there is shown a mechanical version of the valve operating mechanism. In this figure, a piezo-electric actuating device is indicated as 1 and comprises a stack of piezo-electric discs or rings 2 to which a voltage can be applied by a means not shown. One end of the stack of discs or rings 2 is fixedly mounted at 3 in a housing 4 while the other end of the stack is freely movable. At this end of the stack, there is provided, an operating pin 5 which engages an operating lever arm 6 pivoted at 7 and carried by a carrier 8 mounted on the engine block 9. This lever arm 6 is connected at 10 to the actuating rod 11 of the valve 12. As will be seen, the relatively small movement of the piezo-electric device 1 is converted by the lever arm 6 into a considerably larger movement for actuating the valve 12.

In this embodiment, the voltage supplied to the piezo-electric devices acts by direct mechanical linkage on the valve 12, and the valve 12 will move thus in accordance with the voltage supply to the piezo-electric device 1. While in this embodiment no motion sensor has been provided for clarity, in order to enable operation with a feedback loop, a suitable sensor would be mounted to sense the movement of the valve.

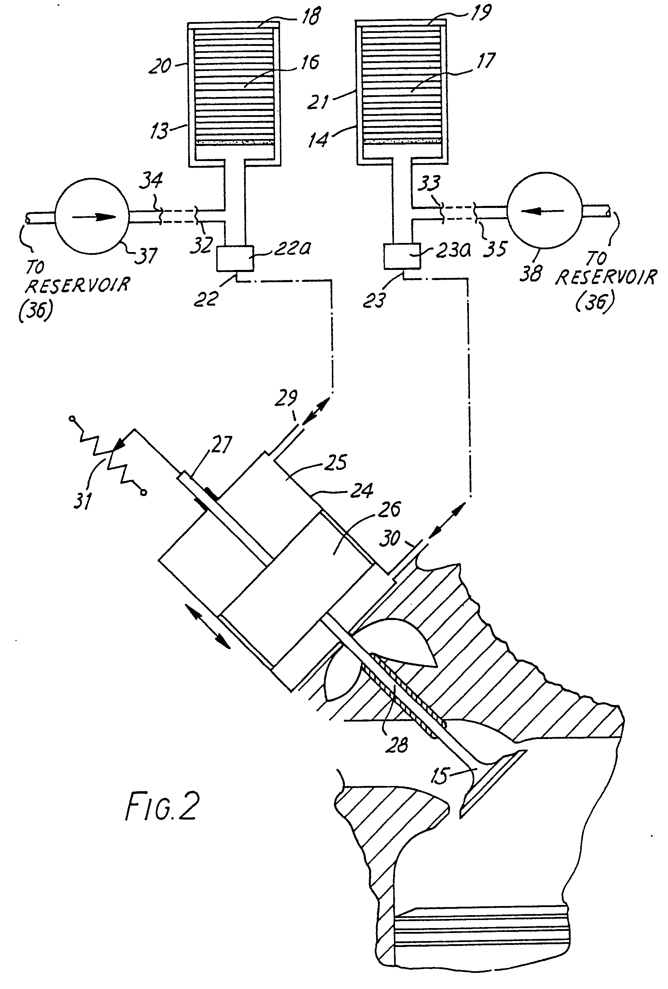

Figure 2 shows a second form of the invention, where two piezo-electric devices, 13 and 14, generate and control the pressure of the fluid/gas, and hence control the movement of the valve 15 of an internal combustion engine. The two piezo-electric devices suitably comprise a number of piezo-electric discs or rings, 16 and 17, to which a voltage can be applied by a means not shown. One end of the stack of discs or rings, 16, 17 is fixedly mounted at 18, 19 in a housing 20, 21, while the other ends of the stacks are freely movable. Where rings are used, the free ends could be attached to a bolt which passes through the stack from one end to the other. At these ends of the stacks, there are connections 22, 23, which lead, through valves 22a and 22b operated by any derived means and controlled by the operating system to a control ram 24, for actuating the valve 15. This ram comprises a cylinder 25 in which lie the piston 26 carried by a rod 27 which is suitably an extension of the rod 28 of the valve 15. Connections 29, 30, are provided which are connected to the connections 22, 23, respectively, and provide for the feed or exhaust of fluid/gas from either side of the piston 26. The end of the rod 27 is suitably provided with a motion sensor, indicated schematically in the variable resistor 31. The system can be closed in that the same fluid/gas is used repeatedly, and connections 32, 33 are not needed, or, alternatively, connections 32, 33 can lead to connections 34, 35 through which extra fluid/gas can be supplied from the reservoir 36 under the control of the one-way valves 37, 38. These one-way valves could be controlled electrically or mechanically, by a means not shown. The reservoir could be pressurised, if required.

In operation, voltages are applied to the stacks of piezo-electric discs or rings 16, 17, (the magnitude and form of the voltage depending upon the required parameters of valve movement of the valve 15). This voltage can be converted into an expanding longitudinal movement of one or more 'strokes' so as to feed fluid/gas under pressure to one side of the control ram 24. Alternatively, the voltage can be converted to a contracting longitudinal movement of one or more 'strokes' so as to control the flow of fluid/gas being exhausted from the control ram 24. Thus the actuating piston 26 will be moved longitudinally in the cylinder 25 in response to the voltages applied to the piezo-electric devices 13 and 14, and will open and close the valve in a controlled way. Feedback of the movement carried out is provided by the movement sensing device 31, and this information is fed back to control apparatus, as will be seen hereafter, in order to provide a control loop for control of the piezo-electric devices 13 and 14.

In some circumstances, particularly in these embodiments, it may be desirable to provide a damper for the operation of the engine valve. This could take the form of a piston and dashpot connected to the end of the valve operating rod, suitably at the position indicated for the motion sensor. The motion sensor could then be suitably relocated.

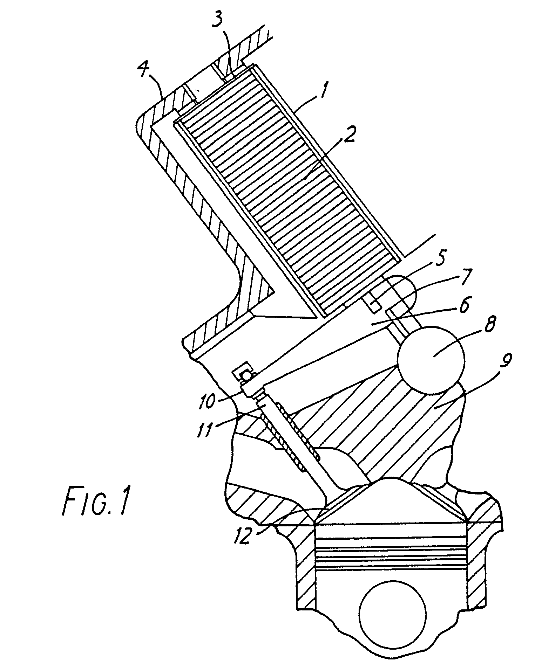

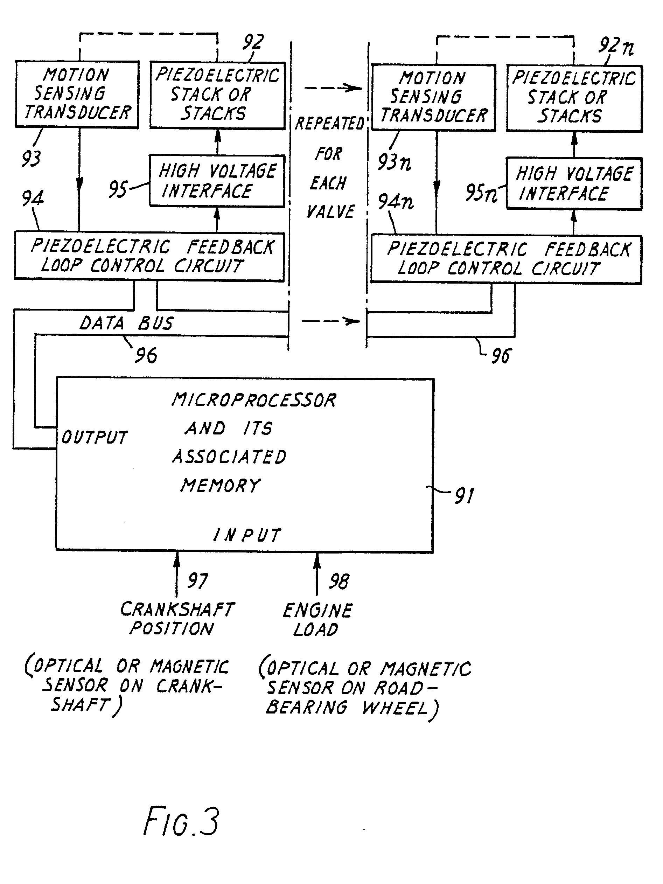

Figure 3 is a block diagram of a suitable electronic control arrangement for operating the valves of an internal combustion engine, and provide for control of the piezo-electric devices as shown in Figures 1 and 2. In the arrangement of Figure 3, all the valves of an internal combustion engine are to be controlled by a single microprocessor or computer and it's associated memory indicated at 91. In this figure, two groups of piezo-electric control devices are shown, indicated 92 and 92n, each group having one, (see Figures 1 and 3), or two, (see Figure 2), piezo-electric devices associated with one motion sensing transducer, 93 and 93n, which feeds information into a piezo-electric feedback, loop control circuit, 94 and 94n.

The loop control circuit 94 and 94n provides a signal to a high-voltage interface, 95, 95n, which feeds it's associated group of piezo-electric devices, 92, 92n. This part of the circuit provides for a loop control system so that the movement transmitted by the piezo-electric device(s) to the valve is sensed and any deviation from the correct movement is corrected by means of the control circuit. In addition to this loop, instructions are also fed into the piezo-electric feed-back loop control circuit, 94, 94n, by way of a data bus 96, which transmits instructions from the microprocessor and its associated memory 91, to the control circuit. The microprocessor unit is fed with the necessary input data providing information as to the operational state of the engine. In the particular example shown, this information is provided at two inputs 97 and 98.

The input 97 is provided with a value indicating the crankshaft position, which may be detected by an optical or magnetic sensor. The input 98 is provided with values representing the engine load, and can be determined by an optical or magnetic sensor on a roadbearing wheel. Other information which can be included in the information presented to the microprocessor include engine speed, mixture, inlet conditions, and exhaust conditions.

The microprocessor or computer is programmed to convert the information which is provided by it's inputs, 97 and 98, into instructions which indicate the optimal operation of the valve in question. These instructions modify the loop control circuit of the individual piezo-electric devices, 92 and 92n, so that optimum operation of the valves results. Thus the processor output data may represent timing, lift position and velocity profile for the operation of the associated valves.

Additional functions of the microprocessor or computer can control the valve to provide a number of different effects. Firstly, admitted fuel-air mixture could be increased so as to make starting of the engine easier. Secondly, the engine could be used as a brake by causing the inlet valves to remain shut during intake strokes of the engine, and in this way cause an increase in deceleration of the vehicle to which it is connected. Thirdly, the lift of the inlet valve can be varied in such a fashion as to increase the pressure drop at the intake port. In this way, the velocity in Reynolds Number of the incoming mixture can be increased. Thus, the thermal efficiency of the engine can be increased, and it is possible to use very lean fuel-air ratios where there is only a part-load. It is also possible to dispense with, entirely, the carburettor butterfly, and rely entirely on valve control. This piezo-electric valve operating system can also easily cope with the extra demands of a turbocharger-supercharger installation; and in the hydraulic mode of the system, can provide valuable cooling to help cope with the increased heat generated.

Considering the construction of the piezo-electric stack itself, a typical piezo-electric material which would be suitable, is that known as PXE5 manufactured by Phillips, which provides an extension of $616 \times 10^{-12}$ meters/volt. If a construction of 1 to 200 discs were used, each disc say 10 mm diameter, and over 5 mm thick, adequate operation will be provided for the hydraulic system outlined in Figure 2. For the mechanical arrangement such as shown in Figure 1, an even more responsive piezo-electric device would be needed, to obviate the necessity of having an over large mechanical ratio.

In a typical situation, an operating voltage of between 500 and 2000 volts could be used. The current supply into the piezo-electric device would be of the order of milliamps, the power needed for driving the piezo-electric devices of an eight cylinder engine for example, would be very approximately the order of 1 H.P.

It will be appreciated that various modifications may be made to the above described embodiments without departing from the scope of the invention. For example, the loop control circuit could be omitted, only direct control of the piezo-electric device being provided. The hydraulic control could be replaced by a simple pneumatic control. Instead of providing a double-acting ram for the actual operation of the valve, this could be replaced by a single-acting ram with a return spring. Where the hydraulic control is used, the hydraulic control apparatus could all be housed together at a position spaced from the actuating cylinders of the valves, so that in this way a single control function limit is formed.

From the above described embodiment, it will be seen that there is provided a valve operating mechanism which, with sufficient control functions, can control the operation of the valves of an internal combustion engine in respect of all their parameters of movement.

## Claims

1. A valve operating mechanism for an internal combustion engine or like valved engine which employs a piezo-electric actuator device characterised in that the piezo-electric actuator device (1, 13, 14) directly or indirectly drives the engine valve (12, 15) in accordance with the expansion of the actuator device (1, 13, 14) and that control means control the electrical feed to the piezo-electric control device (1, 13, 14) in accordance with parameters of the engine operation fed to it.

2. A mechanism as claimed in claim 1, wherein the piezo-electric device (1) is coupled to the engine valve (12) through an amplifying mechanical linkage (6, 7).

3. A mechanism as claimed in claim 2, wherein the linkage (6, 7) comprises a lever arm (6) pivoted at one end and acting on the engine valve (13) at the other end, the piezo-electric device (13) having an operating means (5) engageable with the lever arm close to its pivot (7).

4. A mechanism as claimed in claim 1, wherein the piezo-electric device (13, 14) is connected to the engine valve (12) through a fluid linkage including an hydraulic or pneumatic piston and cylinder arrangement (24) for directly driving the valve (12).

5. A mechanism as claimed in any one of claims 1 to 4, wherein the engine valve is provided with a return spring.

6. A mechanism as claimed in any one of claims 1 to 4, wherein two piezo-electric devices (13, 14) are provided, one (14) for driving the engine valve (12) in the opening direction and the other (13) for driving the engine valve (12) in the closing direction.

7. A mechanism as claimed in any one of claims 1 to 6, wherein the or each piezo-electric device (1, 13, 14) comprises a stack of individual piezo-electric elements (2, 16, 17).

8. A mechanism as claimed in any one of claims 1 to 7, wherein the engine valve (12) is fitted with a motion sensor (31) to provide feedback for control of the piezo-electric member.

9. A mechanism as claimed in any one of claims 1 to 8, wherein the control means includes a microprocessor or computer (91) to which data on engine operation are fed.

10. A mechanism as claimed in claim 9, wherein the microprocessor or computer (91) is fed with the crankshaft position (97) and the engine load (98).

## Patentansprüche

1. Ventilbetätigungsvorrichtung für einen Verbrennungsmotor oder eine ähnliche Ventile aufweisende Maschine mit einer piezoelektrischen Betätigungseinheit, dadurch gekennzeichnet, daß die piezoelektrische Betätigungseinheit (1, 13, 14) direkt oder indirekt das Motorventil (12, 15) entsprechend der Ausdehnung der Betätigungseinheit (1, 13, 14) antreibt und daß Steuermittel die elektrischen Eingangsgrößen der piezoelektrischen Betätigungseinheit (1, 13, 14) entsprechend zugeführten Motorparametern beeinflussen.

2. Vorrichtung nach Anspruch 1, dadurch gekennzeichnet, daß die piezoelektrische Einheit (1) mit dem Motorventil (12) mittels einer mechanisch heraufsetzenden Verbindung (6, 7) an den Motor gekuppelt ist.

3. Vorrichtung nach Anspruch 2, dadurch gekennzeichnet, daß die Verbindung (6, 7) einen Kebelarm (6) aufweist, der an einem Ende gelagert ist und auf das Motorventil (13) am anderen Ende einwirkt, wobei die piezoelektrische Einheit Betätigungsmittel (5) aufweist, die auf den Hebelarm in der Nähe seines Drehpunkts (7) einwirken.

4. Vorrichtung nach Anspruch 1, dadurch gekennzeichnet, daß die piezoelektrische Einheit (13, 14) mit dem Motorventil (12) über eine Fluidverbindung gekoppelt ist, welche eine hydraulische oder pneumatische Kolben- und Zylinder-Anordnung (24) zum direkten Antrieb des Ventils (12) aufweist.

5. Vorrichtung nach einem der Ansprüche 1 bis 4, dadurch gekennzeichnet, daß das Motorventil mit einer Rückstellfeder versehen ist.

6. Vorrichtung nach einem der Ansprüche 1 bis 4, dadurch gekennzeichnet, daß zwei piezoelektrische Einheiten (13, 14) vorgesehen sind, von denen eines (14) das Motorventil (12) in die Öffnungsrichtung und das andere (13) das Motorventil (12) in die Schließrichtung antriebt.

7. Vorrichtung nach einem der Ansprüche 1 bis 6, dadurch gekennzeichnet, daß jede piezoelektrische Einheit (1, 13, 14) einen Stapel einzelner piezoelektrischer Elemente (2, 16, 17) aufweist.

8. Mechanismus nach einem der Ansprüche 1 bis 7, dadurch gekennzeichnet, daß das Motorventil (12) mit einem Bewegungssensor (31) versehen ist, um eine Rückkopplung zur Steuerung der piezoelektrischen Einheit zu erzeugen.

9. Mechanismus nach einem der Ansprüche 1 bis 8, dadurch gekennzeichnet, daß die Steuermittel einen Mikroprozessor oder Computer (91) aufweisen, dem Daten über den Motorbetrieb zugeführt werden.

10. Mechanismus nach Anspruch 9, dadurch gekennzeichnet, daß der Mikroprozessor oder Computer (91) die Kurbelwellenposition (97) oder die Motorbelastung (98) zugeführt erhält.

## Revendications

1. Mécanisme d'actionnement de soupapes pour un moteur à combustion interne ou moteur à système de soupapes analogue, qui utilise un dispositif moteur piézo-électrique, caractérisé en ce que le dispositif moteur piézo-électrique (1, 13, 14) entraîne directement ou indirectement la soupape de moteur (12, 15) en fonction de la dilatation du dispositif moteur (1, 13, 14), et en ce que des moyens de commande commandent l'alimentation électrique vers le dispositif de commande piézo-électrique (1, 13, 14) suivant des paramètres de fonctionnement du moteur qui leur sont appliqués.

2. Mécanisme suivant la revendication 1, caractérisé en ce que le dispositif piézo-électrique (1) est couplé à la soupape de moteur (12) par l'intermédiaire d'un embiellage mécanique amplificateur (6, 7).

3. Mécanisme suivant la revendication 2, caractérisé en ce que l'embiellage (6, 7) comprend un bras de levier (6) monté sur pivot à une extrémité et agissant sur la soupape de moteur (12) à l'autre extrémité, le dispositif piézo-électrique possédant un moyen d'actionnement (5) pouvant être engagé avec le bras de levier au voisinage de son pivot (7).

4. Mécanisme suivant la revendication 1, caractérisé en ce que le dispositif piézo-électrique (13, 14) est connecté à la soupape de moteur (12) par l'intermédiaire d'une liaison par fluide comportant un agencement à piston et cylindre (24) hydraulique ou pneumatique pour entraîner directement la soupape (12).

5. Mécanisme suivant l'une quelconque des revendications 1 à 4, caractérisé en ce que la soupape de moteur est dotée d'un ressort de rappel.

6. Mécanisme suivant l'une quelconque des revendications 1 à 4, caractérisé en ce que deux dispositifs piézo-électriques (13, 14) sont prévus, l'un (14) pour entraîner la soupape de moteur (12) dans le sens d'ouverture et l'autre pour entraîner la soupape de moteur (12) dans le sens de fermeture.

7. Mécanisme suivant l'une quelconque des revendications 1 à 6, caractérisé en ce que le ou chaque dispositif piézo-électrique (1, 13, 14) comprend un empilage d'éléments piézo-électriques individuels (2, 16, 17).

8. Mécanisme suivant l'une quelconque des revendications 1 à 7, caractérisé en ce que la soupape de moteur (12) est dotée d'un détecteur de mouvement (31) pour offrir une réaction destinée à la commande de l'organe piézo-électrique.

9. Mécanisme suivant l'une quelconque des revendications 1 à 8, caractérisé en ce que les moyens de commande comprennent un microprocesseur ou ordinateur (91) auquel des données quant au fonctionnement du moteur sont appliquées.

10. Mécanisme suivant la revendication 9, caractérisé en ce que le microprocesseur ou ordinateur (91) reçoit la position du vilebrequin (97) et la charge du moteur (98).

FIG.1

FIG.2

FIG.3